# EUROPÄISCHE PATENTSCHRIFT

(11) **EP 4 342 688 B1**
(45) Veröffentlichungstag und Bekanntmachung des Hinweises auf die Patenterteilung: **02.07.2025**
(21) Anmeldenummer: 23198710.8
(22) Anmeldetag: 21.09.2023
(51) Int. Cl.: B60C 11/12

(54) **FAHRZEUGLUFTREIFEN**
PNEUMATIC TYRE FOR VEHICLES
BANDAGE PNEUMATIQUE POUR VÉHICULE

(30) Priorität: 23.09.2022 DE 102022210082
(43) Veröffentlichungstag der Anmeldung: 27.03.2024
(73) Patentinhaber: Continental Reifen Deutschland GmbH, 30175 Hannover (DE)
(72) Erfinder: Schlittenhard, Jan, 30165 Hannover (DE); Wackerhage, Tanja, 30165 Hannover (DE)
(74) Vertreter: Continental Corporation

(56) Entgegenhaltungen:
- EP-A2- 0 213 452
- DE-A1- 102010 000 272
- DE-A1- 102014 212 349
- DE-A1- 102017 212 713
- DE-A1- 102020 208 125
- JP-A- 2000 211 321
- JP-A- 2011 157 011
- JP-A- H01 101 205
- US-A1- 2015 165 828

## Beschreibung

Die Erfindung betrifft einen Fahrzeugluftreifen mit einem profilierten Laufstreifen mit einer bei neuem Reifen definierten Profiltiefe und mit an der Laufstreifenperipherie Außenflächen aufweisenden Profilblöcken oder Profilrippen mit jeweils zumindest einem Einschnitt, welcher sich in Draufsicht zur axialen Richtung unter einem Winkel von bis zu 50° erstreckt, in zumindest einem Abschnitt eine Tiefe von mindestens 60% der Profiltiefe aufweist und von zwei Einschnittwänden begrenzt ist, wobei in diesem Abschnitt die eine Einschnittwand in radialer Richtung und die andere Einschnittwand gerade und unter einem konstanten spitzen Winkel von 1° bis 6° zur radialen Richtung verläuft, derart, dass die Breite des Einschnittes in diesem Abschnitt zwischen der Außenfläche und dem Einschnittgrund in radialer Richtung kontinuierlich geringer wird.

Ein derartiger Fahrzeugluftreifen ist beispielsweise aus der JP 2000 211 321 A bekannt. Gemäß einem Ausführungsbeispiel weist der Fahrzeugluftreifen einen Laufstreifen mit Profilblöcken auf, welche mit in Draufsicht in axialer Richtung verlaufenden Einschnitten mit Einschnittwänden und einer Tiefe von größer 50% der Profiltiefe versehen sind. Die eine Einschnittwand verläuft gerade und in radialer Richtung. Die andere Einschnittwand verläuft gerade und unter einem konstanten Winkel zur radialen Richtung geneigt, wobei der Winkel zirka 5° beträgt (nur in der zugehörigen Figur offenbart). Die Breite des Einschnittes wird zwischen der Außenfläche und dem Einschnittgrund in radialer Richtung kontinuierlich geringer. Solche Einschnitte sollen für die Eis- und Schneeperformance günstig sein und das Auftreten einen unregelmäßigen Abriebsbilds verhindern.

Aus der EP 0 213 452 A2 ist ein Fahrzeugluftreifen bekannt, welcher im Laufstreifen mit Einschnitten versehen ist, welche sich ausgehend von der Außenfläche des Laufstreifens in radialer Richtung oder zur radialen Richtung schräg geneigt erstrecken und deren Breite, ausgehend von der Außenfläche des Laufstreifens bis zum Einschnittgrund abnimmt. Die Einschnittwände können, im Querschnitt des Einschnittes betrachtet, geradlinig oder gekrümmt ausgebildet sein, wobei bei einer Ausführung die eine Einschnittwand geneigt ist, während die andere Wand in radialer Richtung und gerade verläuft. Die Einschnitte weisen eine erweiterte Öffnungsbreite auf, die um mindestens das 1,5-Fache größer ist als die mit 0,05 bis 0,15-Facher Profiltiefe ausgebildete, am Einschnittgrund vorliegende Einschnittbreite. Die Erweiterungen der Einschnitte im Mündungsbereich an der Außenfläche des Laufstreifens sollen eine Volumenvergrößerung im Einschnittinneren zur Folge haben, welche beim Abrollen des Reifens eine Reduktion des Druckquotienten und damit eine Verringerung der erzeugten Schallenergie bewirken soll. Dadurch soll auch eine Reduktion von hohen Frequenzanteilen erzielt werden.

Aus der US 2018/0072104 A1 ist ein Fahrzeugluftreifen bekannt, welcher einen Laufstreifen mit Profilblöcken und/oder Profilrippen aufweist, in welchen Einschnitte ausgebildet sind, die in Draufsicht den Profilblock bzw. die Profilrippe in einer Wellenform durchqueren und gleichzeitig auch in einer Wellenform in radialer Richtung verlaufen. Bei einer Ausführungsform ändert sich dabei die Einschnittbreite über die in radialer Richtung vorliegende Wellenform, derart, dass der Einschnitt am Einschnittgrund seine geringste Breite aufweist. Auf diese Weise gestaltete Einschnitte sollen einen unregelmäßigen Abrieb und das Einfangen von Steinen reduzieren.

In den nördlich gelegenen Ländern, wie Schweden, Norwegen und Finnland, ist es unumgänglich, im Winter Fahrzeugluftreifen zu verwenden, die für den Einsatz auf schneeigem und eisigem Untergrund besonders gut geeignet sind. Winterreifen sind daher üblicherweise im Laufstreifen mit einer Vielzahl von Einschnitten versehen, um gute Griffeigenschaften auf winterlichen Fahrbahnen zu gewährleisten. Aus Gründen der Verkehrssicherheit werden auf mit Schnee und/oder Eis bedeckten Straßen zusätzlich größere Mengen an Split als Streugut aufgebracht, welches in Folge der Partikelgrößen, die von Zehntelmillimetern bis einige Millimeter reichen können, sich als besonders zerstörerisch für Laufstreifen mit einer Vielzahl von Einschnitten herausgestellt hat. Streusplit sammelt sich leider besonders leicht in den Einschnitten an und verursacht eine Vielzahl von Schäden und Problemen, insbesondere massive Verformungen des Laufstreifenprofils, ein sehr unregelmäßiges Abriebsbild, das Auftreten von Unwucht und Vibrationen, eine Verschlechterung des Wintergriffs, weil die Einschnittkanten unwirksam werden oder zugedrückt werden, ferner eine Reduktion der Schneetraktionswirkung und der Slush/Aquaplaningeigenschaften, weil durch die Aufweitung der Einschnitte auch Rillenquerschnitte reduziert oder ganz blockiert werden können. Streugut verursacht auch Schäden an etwaigen Spikekörpern von Spikes im Laufstreifen sowie sonstige Profil- sowie Karkassbeschädigungen durch Cut- und Chip-Effekte und Stonedrilling. Besonderes bei höheren Fahrgeschwindigkeiten ist außerdem ein Herausschleudern der Partikel problematisch, da herausgeschleuderte Steine und Steinchen Steinschlagschäden an Fahrzeugen verursachen können und die Verkehrssicherheit insgesamt beeinträchtigen.

Der Erfindung liegt somit die Aufgabe zugrunde, bei einem Fahrzeugluftreifen der eingangs genannten Art die Einschnittsgeometrie derart zu verbessern, dass insgesamt das Ausmaß von in Einschnitten eingefangenen Partikeln aus Streugut deutlich reduziert ist, insbesondere indem die Einschnitte eine Kraft auf etwaig eindringende Partikel ausüben und diese unverzüglich aus den Einschnitten herausdrücken bzw. herausbefördern.

Gelöst wird die gestellte Aufgabe erfindungsgemäß dadurch, dass der Einschnitt an der jeweiligen Außenfläche des Profilblockes bzw. der Profilrippe eine insbesondere konstante Breite von 0,40 mm bis 1,50 mm aufweist, wobei der Einschnitt in seiner Erstreckungsrichtung mehrere Einschnittabschnitte aufweist, in welchen er von den beiden Einschnittwänden derart begrenzt ist, dass innerhalb jedes Einschnittabschnittes zumindest abschnittsweise die eine in radialer Richtung verläuft und die andere unter dem spitzen Winkel zur radialen Richtung verläuft und wobei in in der Erstreckungsrichtung des Einschnittes aufeinander folgenden Einschnittabschnitten die Neigung der Einschnittwände zur radialen Richtung abwechselt.

Gemäß der Erfindung gestaltete Einschnitte sind besonders effektiv, um eindringende Steine und Steinchen aus Streusplit auszustoßen. Diesbezüglich ist vor allem von Bedeutung, dass der Einschnitt zumindest einen Einschnittabschnitt aufweist, in welchem die eine Einschnittwand exakt oder weitgehend exakt in radialer Richtung verläuft und die gegenüberliegende Einschnittwand unter einem sehr kleinen Winkel von 1° bis 6° zur radialen Richtung verläuft. Dadurch ändert der Einschnitt in diesem Abschnitt seine Breite zwischen der Außenfläche und dem Einschnittgrund nur geringfügig, wodurch die an den Einschnitt anschließenden, zum Profilblock/zur Profilrippe gehörenden Profilelemente vorteilhaft versteift werden und die Einschnittwände eine Kraft auf eindringende Steine und Steinchen ausüben können, die diese Partikel verlässlich herausdrückt. Gemäß der Erfindung gestaltete Einschnitte in Profilelementen des Laufstreifens sorgen somit für eine deutliche Reduktion von Verformungen dieser Profilelemente und damit auch für ein verbessertes Abriebsbild, Unwucht und Vibrationen werden vermieden.

Das "Abwechseln" kann derart sein, dass in sämtlichen oder in einigen in der Erstreckungsrichtung des Einschnittes unmittelbar aufeinanderfolgenden Einschnittabschnitten jeweils die Neigung der Einschnittwände relativ zur radialen Richtung abwechselt oder dass die Einschnittwände in mehreren aufeinanderfolgenden Einschnittabschnitten eine übereinstimmende Neigung aufweisen und in weiteren aufeinanderfolgenden Einschnittabschnitten die Einschnittwände umgekehrt geneigt sind.

Bei einer bevorzugten Ausführung beträgt der spitze Winkel 2° bis 4°. Bei einer derartigen Ausgestaltung können die Einschnittwände hinsichtlich ihrer versteifenden und Steine auswerfenden Wirkung besonders ausgewogen aufeinander abgestimmt werden.

Vorteilhafterweise sind die in der Erstreckungsrichtung des Einschnittes aufeinanderfolgenden Einschnittabschnitte bezüglich der Erstreckungsrichtung unterschiedlich orientiert oder quer zur Erstreckungsrichtung zueinander versetzt. Mit derart verlaufenden Einschnitten lässt sich deren versteifende Wirkung auf die den Einschnitten benachbart verlaufenden Profilelementen innerhalb des Profilblockes bzw. der Profilrippe besonders vorteilhaft beeinflussen und es eröffnet sich die Möglichkeit, in solchen Einschnittabschnitten die Neigung der beiden Einschnittwände bezüglich der radialen Richtung zu variieren, um den Effekt des Auswerfens von Streugutpartikeln ebenfalls vorteilhaft zu steuern.

Bei einer bevorzugten Ausführung verläuft der Einschnitt bzw. verlaufen die Einschnitte in Draufsicht in Treppenform, sodass die Einschnittabschnitte in der Erstreckungsrichtung des Einschnittes abwechselnd länger und kürzer sind. Weist der Reifen einen Laufstreifen auf, welcher nicht laufrichtungsgebunden gestaltet ist, sodass der Reifen keine bevorzugte Abrollrichtung bzw. Drehrichtung bei Vorwärtsfahrt hat, ist es vorteilhaft, wenn in der Erstreckungsrichtung des Einschnittes bzw. der Einschnitte die Neigung der Einschnittwände relativ zur radialen Richtung in aufeinanderfolgenden längeren Einschnittabschnitten abwechselt.

Bei einer weiteren vorteilhaften Ausgestaltung des Einschnittes weist dieser in seiner Erstreckungsrichtung zumindest einen in Draufsicht wellenförmig verlaufenden Einschnittabschnitt auf, in welchem in der Erstreckungsrichtung des Einschnittes die Neigung der Einschnittwände relativ zur radialen Richtung in zwischen den Wellenbergen verlaufenden und aufeinanderfolgenden Wellenabschnitten abwechselt. Auch derartig gestaltete Einschnitte sind in einem nicht laufrichtungsgebundenen Laufstreifen besonders effektiv hinsichtlich des Steineauswerfens.

Bei einer noch weiteren vorteilhaften Ausführung weist der Einschnitt in seiner Erstreckungsrichtung zumindest einen in Draufsicht wellenförmig verlaufenden Einschnittabschnitt auf, in welchem abschnittsweise und jeweils über zumindest einen halben, insbesondere zumindest einen kompletten Wellenzyklus die Neigung der Einschnittwände relativ zur radialen Richtung abwechselt. Auch derart gestaltete Einschnitte lassen sich mit einer besonders effektiven Wirkung hinsichtlich des Steineauswerfens in nicht laufrichtungsgebundenen Laufstreifen vorsehen.

Bei einem Fahrzeugluftreifen mit einem laufrichtungsgebunden gestalteten Laufstreifen mit Profilblöcken oder Profilrippen mit an den Einschnitt bzw. die Einschnitte angrenzenden Profilelementen ist es besonders vorteilhaft, wenn das beim Abrollen des Reifens bei Vorwärtsfahrt jeweils zuerst in den Untergrund eintretende Profilelement rückwärtig - an die auslaufende Kante anschließend - überwiegend oder komplett von jener Einschnittwand begrenzt ist, die unter dem spitzen Winkel zur radialen Richtung verläuft. Diese Ausgestaltung ist für die versteifende Wirkung und den gewünschten Effekt des Auswerfens von Partikeln aus Streugut besonders effektiv. Der Einschnitt selbst kann in Draufsicht dabei zumindest abschnittsweise in Wellenform verlaufen, ferner auch zumindest abschnittweise einen zickzack- oder treppenförmigen Verlauf aufweisen.

Bei einem laufrichtungsgebunden gestalteten Laufstreifen mit Einschnitten mit den in Draufsicht in Treppenform verlaufenden Einschnittabschnitten ist es besonders effektiv, wenn zumindest in den längeren Einschnittabschnitten die an die auslaufende Kante des jeweiligen Profilelementes anschließende Einschnittwand unter dem spitzen Winkel zur radialen Richtung verläuft.

Es sind weitere, hinsichtlich des Effektes des Steineauswerfens besonders vorteilhafte und an die jeweilige Profilausgestaltung des Laufstreifens gut anpassbare Ausgestaltungen der Einschnitte möglich.

Bei einer dieser Ausgestaltungen verlaufen die Einschnittabschnitte parallel zueinander und sind quer zur Erstreckungsrichtung des Einschnittes jeweils zueinander versetzt, derart, dass der Einschnittgrund in konstanter Tiefe und durchgehend gerade verläuft.

Bei einer weiteren für bestimmte Ausgestaltungen der Laufstreifenprofilierung vorteilhaften Ausführung weist der Einschnitt an der Außenfläche des Profilblockes oder der Profilrippe in Draufsicht gerade verlaufende Einschnittkanten, von welchen die Einschnittwände ausgehen, und eine konstante Breite auf, wobei die Einschnittabschnitte zueinander quer zur Erstreckungsrichtung versetzt sind.

Wie bereits erwähnt ist es grundsätzlich von Vorteil, wenn Profilblöcke oder zumindest eine Profilrippe vorgesehen sind bzw. ist, welche mit einer Vielzahl von sich parallel zueinander erstreckenden Einschnitten versehen sind bzw. ist.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine vergrößerte Schrägansicht eines Profilblockes eines Laufstreifens eines Fahrzeugluftreifens mit einer Ausführungsvariante der Erfindung,
Fig. 2 eine Draufsicht auf einen Umfangsabschnitt des Profilblockes aus Fig. 1,
Fig. 2a eine Schnittdarstellung entlang der Linie IIa-IIa der Fig. 2,
Fig. 2b eine Schnittdarstellung entlang der Linie IIb-IIb der Fig. 1,
Fig. 3 eine Draufsicht auf einen Abschnitt eines Profilblockes mit einem Einschnitt gemäß einer zweiten Ausführungsvariante der Erfindung, wobei der Einschnitt über seine Ausgestaltung in den Profilblock hinein visualisiert ist,
Fig. 3a eine Schnittdarstellung entlang der Linie IIIa-IIIa der Fig. 3,
Fig. 3b eine Schnittdarstellung entlang der Linie IIIb-IIIb der Fig. 3,
Fig. 3c eine Schnittdarstellung entlang der Linie IIIc-IIIc der Fig. 3,
Fig. 4 eine Draufsicht auf einen Abschnitt eines Profilblockes mit einem Einschnitt gemäß einer dritten Ausführungsvariante der Erfindung, wobei der Einschnitt über seine Ausgestaltung in den Profilblock hinein visualisiert ist,
Fig. 4a eine Schnittdarstellung entlang der Linie IVa-IVa der Fig. 4,
Fig. 4b eine Schnittdarstellung entlang der Linie IVb-IVb der Fig. 4,
Fig. 5 eine Draufsicht auf einen Abschnitt eines Profilblockes mit einem Einschnitt gemäß einer vierten Ausführungsvariante der Erfindung,
Fig. 5a eine Schnittdarstellung entlang der Linie Va-Va der Fig. 5,
Fig. 5b eine Schnittdarstellung entlang der Linie Vb-Vb der Fig. 5,
Fig. 6 eine Draufsicht auf einen Abschnitt eines Profilblockes mit einem Einschnitt gemäß einer fünften Ausführungsvariante der Erfindung,
Fig. 6a eine Schnittdarstellung entlang der Linie Vla-Vla der Fig. 6 und
Fig. 6b eine Schnittdarstellung entlang der Linie VIb-VIb der Fig. 6.

Gemäß der Erfindung ausgeführte Fahrzeugluftreifen sind insbesondere Reifen in Radialbauart, vorzugsweise für Personenkraftwagen, aber auch für Vans (Transporter) oder SUVs, insbesondere für Felgen mit Felgendurchmessern von 13 bis 24 Zoll. Gemäß der Erfindung ausgeführte Reifen können auch Nutzfahrzeugreifen, insbesondere für Busse oder Lastkraftwagen sein, bevorzugt in Radialbauart und vorzugsweise für Felgen mit Felgendurchmessern von 17,5, 19,5 und 22,5 Zoll.

Fahrzeugluftreifen gemäß der Erfindung sind vor allem zum Fahren unter winterlichen Fahrbedingungen, auf mit Schnee und/oder mit Eis bedecktem Untergrund, insbesondere auf solchem, welcher mit Split bestreut ist, besonders geeignet.

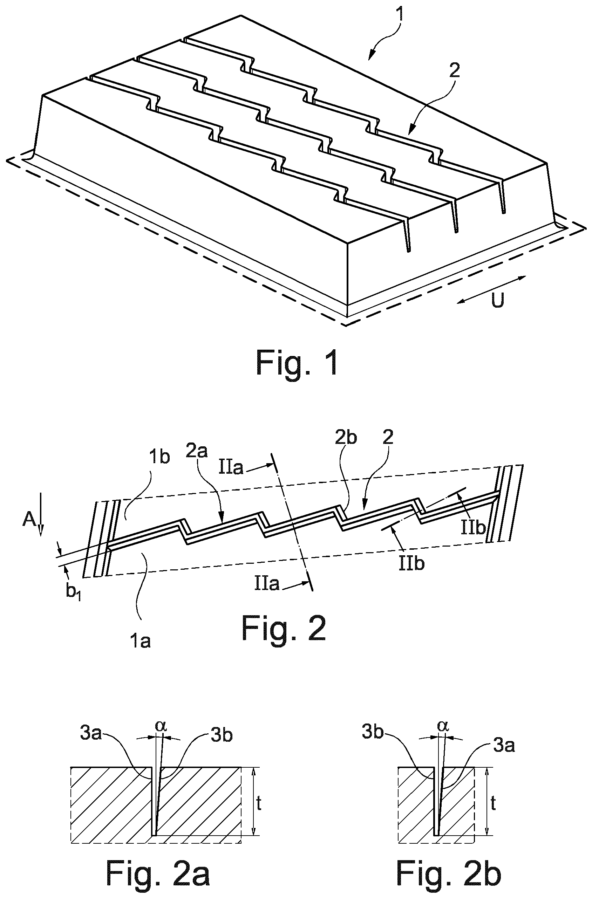

Fig. 1 zeigt eine Ansicht eines Profilblockes 1 eines Laufstreifens. Der vereinfacht als in Draufsicht rechteckig bzw. parallelgrammförmig dargestellte Profilblock 1 ist Bestandteil einer nicht gezeigten, in Umfangsrichtung (Doppelpfeil U) umlaufenden Profilblockreihe und sowohl in Umfangsrichtung als auch in axialer Richtung des Laufstreifens durch nicht dargestellte Rillen begrenzt bzw. umlaufen. Der Profilblock 1 ist von Einschnitten 2 durchquert, die sich zur axialen Richtung des Laufstreifens unter einem Winkel von bis zu etwa 50° und weitgehend parallel zueinander erstrecken und im Profilblock 1 gleichmäßig verteilt angeordnet sind. Eine derartige Anordnung von Einschnitten 2, wie in Fig. 1 dargestellt, ist üblich und an sich bekannt. Die Erstreckungsrichtung wird durch eine Gerade oder eine Linie ermittelt, die an der Außenfläche (Kontaktfläche mit dem Untergrund) des Profilblockes durchgehend entlang des Einschittverlaufs gelegt werden kann.

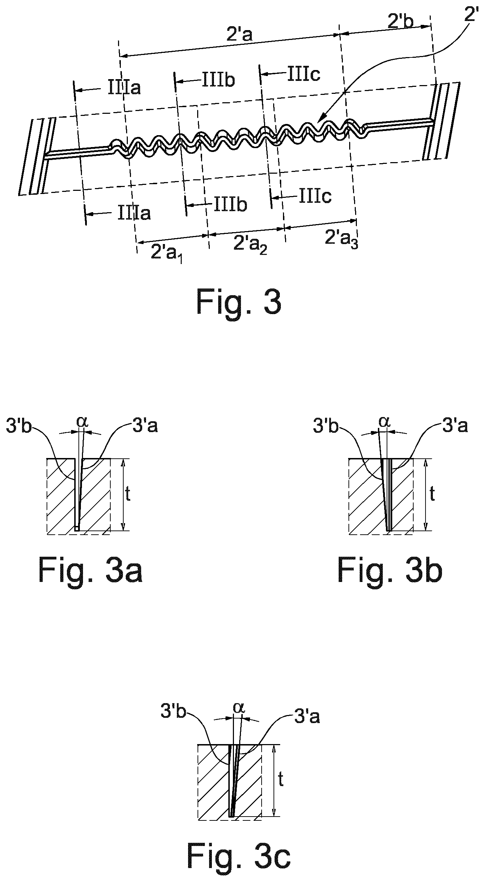

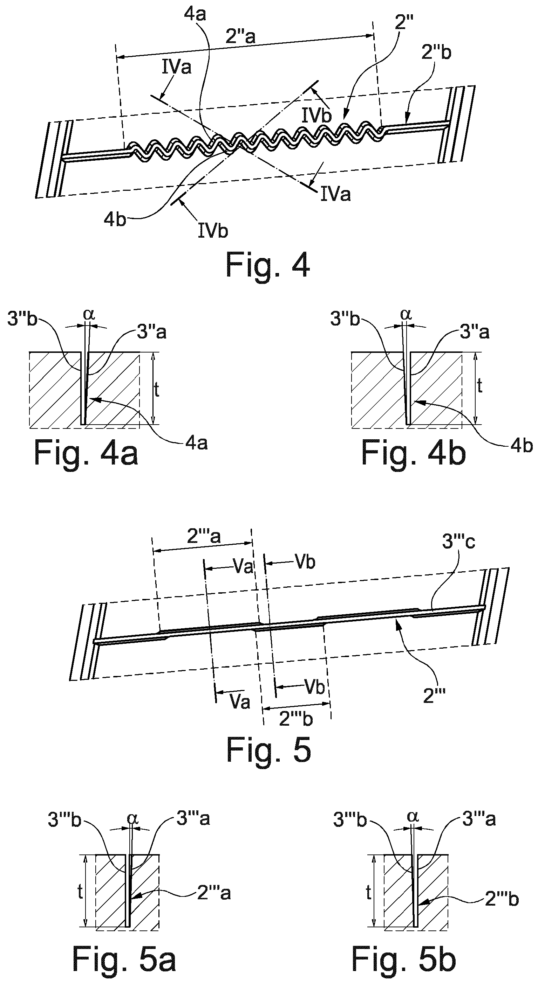

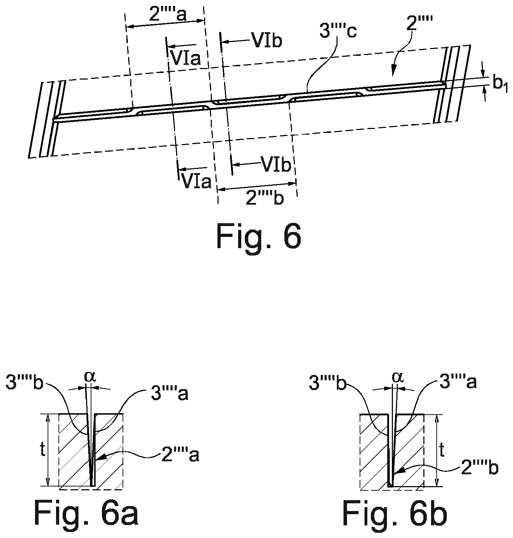

Fig. 2 bis 6 zeigen jeweils nur einen Umfangsabschnitt eines Profilblockes 1 mit je einer Ausführungsvariante eines Einschnittes 2 (Fig. 2), 2' (Fig. 3), 2" (Fig. 4), und 2‴ (Fig. 6) und 2ʺʺ (Fig. 6). Die Einschnitte 2, 2', 2", 2‴ und 2ʺʺ durchqueren den jeweiligen Profilblock 1 jeweils in größerer Anzahl und beispielsweise analog zu Fig. 1.

Die Einschnitte 2, 2', 2", 2‴ und 2ʺʺ weisen eine Tiefe t (Fig. 2a, Fig. 2b, Fig. 3a, Fig. 3b, Fig. 3c, Fig. 4a, Fig. 4b, Fig. 5a, Fig. 5b, Fig. 6a, Fig. 6c) auf, die vor allem über einen mittleren Abschnitt des jeweiligen Einschnittes 2, 2', 2", 2‴ und 2ʺʺ, mindestens 60% der vorgesehenen Profiltiefe (maximale Tiefe der Hauptrillen des Laufstreifens, vorzugsweise von Umfangsrillen) entspricht und üblicherweise bis zu 90 % der Profiltiefe beträgt. Die Einschnitte 2, 2', 2", 2‴ und 2ʺʺ weisen bei den dargestellten Ausführungen in Rillen, insbesondere Umfangsrillen, mündende Endabschnitte auf, welche üblicherweise bis in eine geringere Tiefe reichen als der/die zwischen diesen Endabschnitten vorliegende(n) Einschnittabschnitt(e). An der Außenfläche der Profilblöcke 1 weisen die Einschnitte 2, 2', 2", 2‴ und 2ʺʺ eine über ihre Erstreckung insbesondere konstante Breite b₁ (nur in Fig. 2 und Fig. 6 eingezeichnet) auf, die der üblichen Einschnittbreite entspricht und 0,40 mm bis 1,50 mm, vorzugsweise bis zu 1,00 mm beträgt.

Bei der in Fig. 2, 2a und 2b gezeigten Ausführung verläuft der Einschnitt 2 in Draufsicht auf den Profilblock 1 in einer Zickzack- bzw. Treppenform mit längeren Einschnittabschnitten 2a und kürzeren Einschnittabschnitten 2b. Im Inneren des Profilblockes ist der Einschnitt 2 von je einer Einschnittwand 3a und, dieser gegenüber, von einer Einschnittwand 3b begrenzt. Bei sämtlichen Einschnitten 2 im Profilblock 1 verläuft die Einschnittwand 3a in allen Einschnittabschnitten 2a in radialer Richtung, daher senkrecht zur Außenfläche des Profilblockes 1, die gegenüberliegende Einschnittwand 3b verläuft in den Einschnittabschnitten 2a unter einem konstanten Winkel α von 1° bis 6°, insbesondere von 2° bis zu 4°, zur radialen Richtung, derart, dass der gegenseitige Abstand der beiden Einschnittwände 3a, 3b ausgehend von der Außenfläche bis zum Einschnittgrund kontinuierlich geringer wird. In den Einschnittabschnitten 2b verläuft die Einschnittwand 3a unter dem Winkel α, die Einschnittwand 3b in radialer Richtung. Die in Rillen mündenden Endabschnitte sind bei diesem Ausführungsbeispiel längere Einschnittabschnitte 2a. Die Treppenform des Einschnitts 2 ist insbesondere derart, dass die kürzeren Einschnittabschnitte 2b in Draufsicht auf den Profilblock 1 unter einem Winkel von 90° +/- 10° zu den längeren Einschnittabschnitten 2a verlaufen, wobei die Erstreckungslänge der kürzeren Einschnittabschnitte 2b entlang der an der Außenfläche vorliegenden Mittellinie der Einschnittabschnitte 2b 1,00 mm bis 2,00 mm beträgt. Die Erstreckungslänge der längeren Einschnittabschnitte 2a beträgt in der Größenordnung des 2- bis 4-Fachen der Erstreckungslänge der kürzeren Einschnittabschnitte 2b.

Die in Fig. 2, 2a und 2b gezeigte Ausführung ist für einen laufrichtungsgebunden einzusetzenden Reifen vorgesehen. Die Abrollrichtung des Reifens bei Vorwärtsfahrt ist in Fig. 2 mit dem Pfeil A gekennzeichnet, wobei an den Einschnitt 2 zwei zum Profilblock 1 gehörende Profilelemente 1a, 1b anschließen, von welchen das eine, in Fig. 2 das untere Profilelement 1a, beim Abrollen des Reifens bei Vorwärtsfahrt zuerst in den Untergrund eintritt. An der auslaufenden Kante dieses Profilelementes 1a schließt jene Einschnittwand 3b an, die zumindest in den längeren Einschnittabschnitten 2a unter dem Winkel dem Winkel α von 1° bis 6° zur radialen Richtung verläuft.

Bei einer alternativen Ausführung des in Fig. 2, 2a und 2b gezeigten Ausführungsbeispiels für einen nicht laufrichtungsgebunden gestalteten Laufstreifen ist bei in Erstreckungsrichtung des Einschnittes 2 aufeinander folgenden längeren Einschnittabschnitten 2a und bei in Erstreckungsrichtung des Einschnittes 2 aufeinander folgenden kürzeren Einschnittabschnitten 2b jeweils abwechselnd eine der beiden Einschnittwände 3a oder 3b unter dem Winkel α zur radialen Richtung geneigt.

Fig. 3 (über seine Ausgestaltung im Profilblock 1 visualisierter Einschnitt), Fig. 3a Fig. 3b und Fig. 3c zeigen eine Ausführungsform, bei welcher sich der Einschnitt 2', in Draufsicht betrachtet, aus einem wellenförmig verlaufenden mittleren Einschnittabschnitt 2'a und zwei randseitigen Einschnittabschnitten 2'b zusammensetzt. Der mittlere Einschnittabschnitt 2'a verläuft in Draufsicht in Form mehrerer Zyklen einer harmonischen Welle mit einer an der Außenfläche des Profilblocks 1 insbesondere konstanten Amplitude und konstanten Wellenlänge. Der wellenförmig verlaufende Einschnittabschnitt 2'a setzt sich aus drei Teilabschnitten 2'a₁, 2'a₂ und 2'as zusammen, die im Beispiel im Wesentlichen gleich große Erstreckungslängen aufweisen und im Beispiel im Wesentlichen über je zwei Wellenzyklen verlaufen. Der Einschnitt 2' ist ebenfalls von einer Einschnittwand 3'a (in Fig. 3 die "obere" Einschnittwand) und einer Einschnittwand 3' b begrenzt, wobei in den Teilabschnitten 2'a₁ und 2'as (Fig. 3b) die Einschnittwand 3'b unter dem Winkel α zur radialen Richtung geneigt verläuft und die gegenüberliegende Einschnittwand 3'a in radialer Richtung verläuft. In den randseitigen Einschnittabschnitten 2'b (Fig. 3a) und im mittleren Teilabschnitt 2'a₂ (Fig. 3c) verläuft die Einschnittwand 3'a unter dem Winkel α zur radialen Richtung geneigt.

Fig. 4 (über seine Ausgestaltung im Profilblock 1 visualisierter Einschnitt), Fig. 4a und Fig. 4b zeigen einen Einschnitt 2", welcher sich, in Draufsicht betrachtet, aus einem wellenförmig verlaufenden mittleren Einschnittabschnitt 2"a und zwei in Draufsicht gerade verlaufenden, randseitigen Einschnittabschnitten 2"b zusammensetzt. Der mittlere Einschnittabschnitt 2"a verläuft in Draufsicht in Form mehrerer Zyklen einer harmonischen Welle mit einer an der Außenfläche des Profilblocks 1 insbesondere konstanten Amplitude und mit einer insbesondere konstanten Wellenlänge. Die Einschnittwände 3"a, 3"b im mittlere Einschnittabschnitt 2"a enden somit an der Außenfläche des Profilblocks 1 als entsprechend wellenförmig verlaufende Kanten mit Wellenbergen, die abwechselnd in die eine und die andere Umfangsrichtung weisen und mit zwischen den Wellenbergen verlaufenden Wellenabschnitten 4a, 4b, wobei die Wellenabschnitte 4a und die Wellenabschnitte 4b jeweils untereinander übereinstimmende Orientierung aufweisen. Die Einschnittwand 3"a (in Fig. 4 die "obere" Einschnittwand) ist in den, insbesondere in sämtlichen Wellenabschnitten 4a (Fig. 4a), unter dem Winkel α zur radialen Richtung geneigt, vorzugsweise auch über einen Teilbereich der anschließenden Wellenberge, und verläuft ansonsten in radialer Richtung. Hingegen ist die Einschnittwand 3"b in den, insbesondere in sämtlichen Wellenabschnitten 4b und vorzugsweise über einen Teilbereich der anschließenden Wellenberge, unter dem Winkel α zur radialen Richtung geneigt (Fig. 4b) und verläuft ansonsten in radialer Richtung. In den randseitigen Einschnittabschnitten 2"b verläuft entweder die Einschnittwand 3"a oder die Einschnittwand 3"b unter dem Winkel α zur radialen Richtung geneigt.

Fig. 5, 5a und 5b zeigen eine Ausführungsform mit einem Einschnitt 2‴, welcher einen gerade verlaufenden und konstant breiten Einschnittgrund 3‴c aufweist. Der Einschnitt 2‴ ist von einer Einschnittwand 3‴a (in Fig. 5 die "obere" Einschnittwand) und einer Einschnittwand 3‴b begrenzt. Der Einschnitt 2‴ setzt sich in der Erstreckungsrichtung des Einschnittes 2‴ abwechselnd aus Einschnittabschnitten 2‴a und 2‴b zusammen, wobei in den Einschnittabschnitten 2‴a (siehe Fig. 5a) die Einschnittwand 3‴a unter dem Winkel α zur radialen Richtung geneigt ist und die Einschnittwand 3‴b in radialer Richtung verläuft und wobei in den Einschnittabschnitten 2‴b (siehe Fig. 5b) die Einschnittwand 3‴a in radialer Richtung verläuft und die Einschnittwand 3‴b unter dem Winkel α zur radialen Richtung geneigt ist. Die aneinander anschließenden Einschnittabschnitte 2‴a und 2‴b überlappen einander geringfügig in der Erstreckungsrichtung des Einschnittes 2‴ unter Bildung von kurzen, etwa 1,0 mm bis 1,5 mm langen Übergangsabschnitten.

Bei der in Fig. 6, 6a und 6b gezeigten Variante ist der Einschnitt 2ʺʺ an der Außenfläche des Profilblockes 1 ein gerader Einschnitt mit einer insbesondere konstanten Breite b₁ und parallel zueinander verlaufenden Einschnittkanten. Der Einschnitt 2ʺʺ ist, ausgehend von den Einschnittkanten, von zwei Einschnittwänden 3ʺʺa (in Fig. 6 die "obere" Einschnittwand) und 3""b begrenzt und setzt sich in seiner Erstreckungsrichtung abwechselnd aus Einschnittabschnitten 2""a und 2ʺʺb zusammen, wobei in den Einschnittabschnitten 2""a (Fig. 6a) die Einschnittwand 3""a in radialer Richtung verläuft und die Einschnittwand 3""b unter dem Winkel α zur radialen Richtung geneigt ist, derart, dass der Einschnitt 2ʺʺ in Richtung Einschnittgrund 3""c schmäler wird. In den Einschnittabschnitten 2ʺʺb (Fig. 6b) ist die Neigung der Einschnittwände 3""a, 3ʺʺb umgekehrt. Die Ausgestaltung mit konstantem Winkel α ist bevorzugt, sodass der Einschnittgrund 3ʺʺc eine weitgehend konstante Breite aufweist.

### Bezugszeichenliste

- 1: Profilblock
- 1a, 1b: Profilelement
- 2, 2', 2": Einschnitt
- 2‴, 2ʺʺ: Einschnitt
- 2a: längerer Einschnittabschnitt
- 2b: kürzerer Einschnittabschnitt
- 2'a, 2'b: Einschnittabschnitt
- 2'a₁, 2'a₂, 2'a₃: Teilabschnitt
- 2"a, 2"b: Einschnittabschnitt
- 2‴a, 2‴b: Einschnittabschnitt
- 2ʺʺa, 2""b: Einschnittabschnitt
- 3a, 3b: Einschnittwand
- 3'a, 3'b: Einschnittwand
- 3"a, 3"b: Einschnittwand
- 3‴a, 3‴b: Einschnittwand
- 3‴c: Einschnittgrund
- 3ʺʺa, 3ʺʺb: Einschnittwand
- 3ʺʺc: Einschnittgrund
- 4a, 4b: Wellenabschnitt
- b₁: Breite
- t: Tiefe
- A: Abrollrichtung
- U: Umfangsrichtung
- α: Winkel

## Patentansprüche

1. Fahrzeugluftreifen mit einem profilierten Laufstreifen mit einer bei neuem Reifen definierten Profiltiefe und mit an der Laufstreifenperipherie Außenflächen aufweisenden Profilblöcken (1) oder Profilrippen mit jeweils zumindest einem Einschnitt (2, 2', 2", 2‴, 2ʺʺ), welcher sich in Draufsicht zur axialen Richtung unter einem Winkel von bis zu 50° erstreckt, in zumindest einem Abschnitt (2a, 2b, 2'a, 2'b, 2"a, 2"b, 2‴a, 2‴b, 2ʺʺa, 2ʺʺb) eine Tiefe (t) von mindestens 60% der Profiltiefe aufweist und von zwei Einschnittwänden (3a, 3b, 3'a, 3'b, 3"a, 3"b, 3‴a, 3‴b, 3""a, 3ʺʺb) begrenzt ist, wobei in diesem Abschnitt (2a, 2b, 2'a, 2'b, 2"a, 2"b, 2‴a, 2‴b, 2""a, 2""b) die eine Einschnittwand (3a, 3'a, 3"a, 3‴a, 3ʺʺa oder 3b, 3'b, 3"b, 3‴b, 3ʺʺb) in radialer Richtung und die andere Einschnittwand (3a, 3'a, 3"a, 3‴a, 3""a oder 3b, 3'b, 3"b, 3‴b, 3""b) gerade und unter einem konstanten spitzen Winkel (α) von 1° bis 6° zur radialen Richtung verläuft, derart, dass die Breite des Einschnittes (2, 2', 2", 2‴, 2"") in diesem Abschnitt (2a, 2b, 2'a, 2'b, 2"a, 2"b, 2‴a, 2‴b, 2""a, 2""b) zwischen der Außenfläche und dem Einschnittgrund (3‴c, 3ʺʺc) in radialer Richtung kontinuierlich geringer wird,
**dadurch gekennzeichnet,**
**dass** der Einschnitt (2, 2', 2", 2‴, 2ʺʺ) an der jeweiligen Außenfläche des Profilblockes (1) bzw. der Profilrippe eine insbesondere konstante Breite (b₁) von 0,40 mm bis 1,50 mm aufweist, wobei der Einschnitt (2, 2', 2", 2‴, 2"") in seiner Erstreckungsrichtung mehrere Einschnittabschnitte (2a, 2b, 2'a, 2'b, 2"a, 2"b, 2‴a, 2‴b, 2""a, 2ʺʺb) aufweist, in welchen er von den beiden Einschnittwänden (3a, 3'a, 3"a, 3‴a, 3ʺʺa oder 3b, 3'b, 3"b, 3‴b, 3""b) derart begrenzt ist, dass innerhalb jedes Einschnittabschnittes (2a, 2b, 2'a, 2'b, 2"a, 2"b, 2‴a, 2‴b, 2""a, 2""b) zumindest abschnittsweise die eine in radialer Richtung verläuft und die andere unter dem spitzen Winkel (α) zur radialen Richtung verläuft und wobei in in der Erstreckungsrichtung des Einschnittes (2, 2', 2", 2‴, 2"") aufeinander folgenden Einschnittabschnitten (2a, 2b, 2'a, 2'b, 2"a, 2"b, 2‴a, 2‴b, 2""a, 2""b) die Neigung der Einschnittwände (3a, 3'a, 3"a, 3‴a, 3""a oder 3b, 3'b, 3"b, 3‴b, 3""b) zur radialen Richtung abwechselt.

2. Fahrzeugluftreifen nach Anspruch 1, **dadurch gekennzeichnet, dass** der spitze Winkel (α) 2° bis 4° beträgt.

3. Fahrzeugluftreifen nach Anspruch 1 oder 2, **dadurch gekennzeichnet, dass** die in der Erstreckungsrichtung des Einschnittes (2, 2', 2", 2"', 2ʺʺ) aufeinander folgenden Einschnittabschnitte (2a, 2b, 2'a, 2'b, 2"a, 2"b, 2‴a, 2‴b, 2""a, 2ʺʺb) bezüglich der Erstreckungsrichtung unterschiedlich orientiert sind bzw. quer zur Erstreckungsrichtung zueinander versetzt sind.

4. Fahrzeugluftreifen nach einem oder mehreren der Ansprüche 1 bis 3, **dadurch gekennzeichnet, dass** Einschnittabschnitte (2a, 2b) eines Einschnittes (2) in Draufsicht in Treppenform verlaufen und abwechselnd länger und kürzer sind.

5. Fahrzeugluftreifen nach Anspruch 4, **dadurch gekennzeichnet, dass** in der Erstreckungsrichtung des Einschnittes (2) die Neigung der Einschnittwände (3a, 3b) relativ zur radialen Richtung in aufeinanderfolgenden längeren Einschnittabschnitten (2a) abwechselt.

6. Fahrzeugluftreifen nach einem der Ansprüche 1 bis 3, **dadurch gekennzeichnet, dass** der Einschnitt (2") in seiner Erstreckungsrichtung zumindest einen in Draufsicht wellenförmig verlaufenden Einschnittabschnitt (2"a) aufweist, in welchem in der Erstreckungsrichtung des Einschnittes (2") die Neigung der Einschnittwände (3"a, 3"b) relativ zur radialen Richtung in zwischen den Wellenbergen verlaufenden und aufeinanderfolgenden Wellenabschnitten (4a, 4b) abwechselt.

7. Fahrzeugluftreifen nach einem der Ansprüche 1 bis 3, **dadurch gekennzeichnet, dass** der Einschnitt (2') in seiner Erstreckungsrichtung zumindest einen in Draufsicht wellenförmig verlaufenden Einschnittabschnitt (2'a) aufweist, in welchem abschnittsweise und jeweils über zumindest einen halben, insbesondere zumindest einen Wellenzyklus die Neigung der Einschnittwände (3'a, 3b) relativ zur radialen Richtung abwechselt.

8. Fahrzeugluftreifen mit einem laufrichtungsgebunden gestalteten Laufstreifen mit Profilblöcken oder Profilrippen mit an den Einschnitt/die Einschnitte (2) angrenzenden Profilelementen (1a, 1b), nach einem der Ansprüche 1 bis 4, **dadurch gekennzeichnet, dass** das beim Abrollen des Reifens bei Vorwärtsfahrt jeweils zuerst in den Untergrund eintretende Profilelement (1a) rückwärtig - an die die auslaufende Kante anschließend - überwiegend oder komplett von jener Einschnittwand (3b) begrenzt ist, die unter dem spitzen Winkel (α) zur radialen Richtung verläuft.

9. Fahrzeugluftreifen nach Anspruch 4 und 8, **dadurch gekennzeichnet, dass** bei den in Draufsicht in Treppenform verlaufenden Einschnittabschnitten (2a, 2b) zumindest in den längeren Einschnittabschnitten (2a) die an die auslaufende Kante des jeweiligen Profilelementes (1a) anschließende Einschnittwand (3b) unter dem spitzen Winkel (α) zur radialen Richtung verläuft.

10. Fahrzeugluftreifen nach einem der Ansprüche 1 bis 3, **dadurch gekennzeichnet, dass** die Einschnittabschnitte (2‴a, 2‴b) parallel zueinander verlaufen und quer zur Erstreckungsrichtung des Einschnittes (2‴) jeweils zueinander versetzt sind, derart, dass der Einschnittgrund (3‴c) in konstanter Tiefe und durchgehend gerade verläuft.

11. Fahrzeugluftreifen nach einem der Ansprüche 1 bis 3, **dadurch gekennzeichnet, dass** der Einschnitt (2"") an der Außenfläche des Profilblockes (1) oder der Profilrippe in Draufsicht gerade verlaufende Einschnittkanten, von welchen die Einschnittwände (3""a, 3ʺʺb) ausgehen, und eine konstante Breite (b₁) aufweist, wobei die Einschnittabschnitte (2""a, 2""b) zueinander quer zur Erstreckungsrichtung versetzt sind.

12. Fahrzeugluftreifen nach einem oder mehreren der Ansprüche 1 bis 11, **dadurch gekennzeichnet, dass** Profilblöcke oder zumindest eine Profilrippe vorgesehen sind bzw. ist, welche mit einer Vielzahl von sich parallel zueinander erstreckenden Einschnitten versehen sind bzw. ist.

## Claims

1. Pneumatic vehicle tyre having a profiled tread with a tread depth defined in the case of a new tyre and having profile blocks (1) or profile ribs with in each case at least one incision (2, 2', 2", 2‴, 2ʺʺ) on the outer surfaces of the tread periphery; which in top view extends at an angle of up to 50° to the axial direction, in at least one portion (2a, 2b, 2'a, 2'b, 2"a, 2"b, 2‴a, 2‴b, 2ʺʺa, 2ʺʺb) has a depth (t) of at least 60% of the profile depth and is delimited by two incision walls (3a, 3b, 3'a, 3'b, 3"a , 3"b, 3‴a, 3‴b, 3ʺʺa, 3ʺʺb), wherein in this portion (2a, 2b, 2'a, 2'b, 2"a, 2"b, 2‴a, 2‴b, 2ʺʺa, 2ʺʺb) the one incision wall (3a, 3'a, 3"a, 3‴a, 3ʺʺa, or 3b, 3'b, 3"b, 3‴b, 3""b) extends in the radial direction and the other incision wall (3a, 3'a, 3"a, 3‴a, 3""a or 3b, 3'b, 3"b, 3‴b, 3""b) extends straight and at a constant acute angle (a) of 1° to 6° to the radial direction in such a way that the width of the incision (2, 2', 2", 2‴, 2ʺʺ) in this portion (2a, 2b, 2'a, 2'b, 2"a, 2"b, 2‴a, 2‴b, 2ʺʺa, 2ʺʺb) continuously decreases in the radial direction between the outer surface and the incision base (3‴c, 3ʺʺc),
**characterized in that**
the incision (2, 2', 2", 2‴, 2"") has an in particular constant width (b₁) of 0.40 mm to 1.50 mm on the respective outer surface of the profile block (1) or the profile rib, wherein the incision (2, 2', 2", 2‴, 2"") in its direction of extent has a plurality of incision portions (2a, 2b, 2'a, 2'b, 2"a, 2"b, 2‴a, 2‴b, 2""a, 2""b), in which it is delimited by the two incision walls (3a, 3'a, 3"a, 3‴a, 3""a or 3b, 3'b, 3"b, 3‴b, 3""b) in such a manner that within each incision portion (2a, 2b, 2'a, 2'b, 2"a, 2"b, 2‴a, 2‴b, 2""a, 2""b) at least in portions the one extends in the radial direction, and the other extends at the acute angle (α) to the radial direction, and wherein in the direction of extent of the incision (2, 2', 2", 2‴, 2ʺʺ) in successive incision portions (2a, 2b, 2'a, 2'b, 2"a, 2"b, 2‴a, 2‴b, 2""a, 2""b) the inclination of the incision walls (3a, 3'a, 3"a, 3‴a, 3""a or 3b, 3'b, 3"b, 3‴b, 3""b) alternates to the radial direction.

2. Pneumatic vehicle tyre according to Claim 1, **characterized in that** the acute angle (α) is 2° bis 4°.

3. Pneumatic vehicle tyre according to Claim 1 or 2, **characterized in that** the incision portions (2a, 2b, 2'a, 2'b, 2"a, 2"b, 2‴a, 2"'b, 2""a, 2""b) which are successive in the direction of extent of the incision (2, 2', 2", 2‴, 2ʺʺ) are oriented differently with respect to the direction of extent, or are mutually offset transversely to the direction of extent.

4. Pneumatic vehicle tyre according to one or a plurality of Claims 1 to 3, **characterized in that** incision portions (2a, 2b) of an incision (2) in top view extend in the form of a staircase and are alternately longer and shorter.

5. Pneumatic vehicle tyre according to Claim 4, **characterized in that** in the direction of extent of the incision (2) the inclination of the incision walls (3a, 3b) relative to the radial direction alternates in successive longer incision portions (2a).

6. Pneumatic vehicle tyre according to one of Claims 1 to 3, **characterized in that** in top view the incision (2") in its direction of extent has at least one wave-shaped incision portion (2"a) in which the inclination of the incision walls (3"a, 3"b) relative to the radial direction alternates in the direction of extent of the incision (2") in successive wave portions (4a, 4b) extending between the wave crests.

7. Pneumatic vehicle tyre according to any one of Claims 1 to 3, **characterized in that** the incision (2') in its direction of extent in top view has at least one wave-shaped incision portion (2'a) in which in portions the inclination of the incision walls (3'a, 3b) alternates relative to the radial direction in each case over at least half, in particular at least one, wave cycle.

8. Pneumatic vehicle tyre having a directional tread with profile blocks or profile ribs having profile elements (1a, 1b) adjacent to the incision(s) (2), according to any one of Claims 1 to 4, **characterized in that**, when rolling the tyre during forward travel, the profile element (1a) that enters the ground first is predominantly or completely delimited towards the rear, adjoining the outgoing edge, by the incision wall (3b) which extends at the acute angle (α) to the radial direction.

9. Pneumatic vehicle tyre according to Claims 4 and 8, **characterized in that** in the case of the incision portions (2a, 2b) extending in the form of a staircase in top view, at least in the longer incision portions (2a), the incision wall (3b) adjoining the outgoing edge of the respective profile element (1a) extends at the acute angle (α) to the radial direction.

10. Pneumatic vehicle tyre according to one of Claims 1 to 3, **characterized in that** the incision portions (2‴a, 2‴b) extend parallel to one another and are in each case mutually offset transversely to the direction of extent of the incision (2‴) in such a manner that the incision base (3‴c) extends at a constant depth and continuously straight.

11. Pneumatic vehicle tyre according to one of Claims 1 to 3, **characterized in that** the incision (2"") on the outer surface of the profile block (1) or the profile rib in top view has straight incision edges from which the incision walls (3""a, 3""b) originate, and has a constant width (b₁), wherein the incision portions (2""a, 2""b) are mutually offset transversely to the direction of extent.

12. Pneumatic vehicle tyre according to one or a plurality of Claims 1 to 11, **characterized in that** profile blocks, or at least one profile rib, are/is provided, which are/is provided with a plurality of incisions extending parallel to one another.

## Revendications

1. Pneumatique de véhicule avec une bande de roulement profilée avec une profondeur de profil définie pour un pneu neuf et avec des blocs de profil (1) ou des nervures de profil présentant des surfaces extérieures à la périphérie de la bande de roulement avec respectivement au moins une entaille (2, 2', 2", 2‴, 2ʺʺ) qui s'étend en vue de dessus par rapport à la direction axiale selon un angle de jusqu'à 50°, dans au moins une section (2a, 2b, 2'a, 2'b, 2"a, 2"b, 2"'a, 2"'b, 2""a, 2""b) présente une profondeur (t) d'au moins 60 % de la profondeur de profil et est délimitée par deux parois d'entaille (3a, 3b, 3'a, 3'b, 3"a, 3"b, 3"'a, 3"'b, 3""a, 3""b), dans cette section (2a, 2b, 2'a, 2'b, 2"a, 2"b, 2"'a, 2"'b, 2""a, 2""b), l'une des parois d'entaille (3a, 3'a, 3"a, 3"'a, 3""a ou 3b, 3'b, 3"b, 3"'b, 3""b) dans la direction radiale et l'autre paroi d'entaille (3a, 3'a, 3"a, 3"'a, 3""a ou 3b, 3'b, 3"b, 3"'b, 3""b) étant rectiligne et formant un angle aigu constant (α) de 1° à 6° par rapport à la direction radiale, de telle sorte que la largeur de l'entaille (2, 2', 2", 2"', 2"") dans cette section (2a, 2b, 2'a, 2'b, 2"a, 2"b, 2"'a, 2"'b, 2""a, 2""b) entre la surface extérieure et le fond d'entaille (3ʺʺc, 3""c) diminue de manière continue dans la direction radiale,
**caractérisé**
**en ce que** l'entaille (2, 2', 2", 2"', 2"") présente sur la surface extérieure respective du bloc de profil (1) ou de la nervure de profil présente une largeur (b₁) notamment constante de 0,40 mm à 1,50 mm, l'entaille (2, 2', 2", 2"', 2"") présentant dans sa direction d'extension plusieurs sections d'entaille (2a, 2b, 2'a, 2'b, 2"a, 2"b, 2"'a, 2‴b, 2""a, 2""b) dans lesquelles elle est délimitée par les deux parois d'entaille (3a, 3'a, 3"a, 3"'a, 3""a ou 3b, 3'b, 3"b, 3"'b, 3""b) de telle sorte qu'à l'intérieur de chaque section d'entaille (2a, 2b, 2'a, 2'b, 2"a, 2"b, 2"'a, 2"'b, 2""a, 2""b), au moins par sections, l'une s'étend dans la direction radiale et l'autre s'étend selon l'angle aigu (α) par rapport à la direction radiale, et, dans des sections d'entailles (2a, 2b, 2'a, 2'b, 2"a, 2"b, 2‴a, 2‴b, 2ʺʺa, 2""b) successives dans la direction d'extension de l'entaille (2, 2', 2", 2"', 2""), l'inclinaison des parois d'entaille (3a, 3'a, 3"a, 3‴a, 3""a ou 3b, 3'b, 3"b, 3‴b, 3""b) par rapport à la direction radiale est alternée.

2. Pneumatique de véhicule selon la revendication 1, **caractérisé en ce que** l'angle aigu (α) est de 2° à 4°.

3. Pneumatique de véhicule selon la revendication 1 ou 2, **caractérisé en ce que** les sections d'entaille (2a, 2b, 2'a, 2'b, 2"a, 2"b, 2‴a, 2‴b, 2""a, 2""b) successives dans la direction d'extension de l'entaille (2, 2', 2", 2‴, 2"") sont orientées différemment par rapport à la direction d'extension ou sont décalées les unes par rapport aux autres transversalement à la direction d'extension.

4. Pneumatique de véhicule selon une ou plusieurs des revendications 1 à 3, **caractérisé en ce que** des sections d'entaille (2a, 2b) d'une entaille (2) s'étendent en forme d'escalier en vue de dessus et sont alternativement plus longues et plus courtes.

5. Pneumatique de véhicule selon la revendication 4, **caractérisé en ce que**, dans la direction d'extension de l'entaille (2), l'inclinaison des parois d'entaille (3a, 3b) par rapport à la direction radiale alterne dans des sections d'entaille successives plus longues (2a).

6. Pneumatique de véhicule selon l'une quelconque des revendications 1 à 3, **caractérisé en ce que** l'entaille (2") présente dans sa direction d'extension au moins une section d'entaille (2"a) s'étendant sous forme ondulée en vue de dessus, dans laquelle, dans la direction d'extension de l'entaille (2"), l'inclinaison des parois d'entaille (3"a, 3"b) par rapport à la direction radiale alterne dans des sections d'onde (4a, 4b) s'étendant entre les crêtes d'onde et se succédant.

7. Pneumatique de véhicule selon l'une quelconque des revendications 1 à 3, **caractérisé en ce que** l'entaille (2') présente dans sa direction d'extension au moins une section d'entaille (2'a) s'étendant sous forme ondulée en vue de dessus, dans laquelle l'inclinaison des parois d'entaille (3'a, 3b) par rapport à la direction radiale alterne par sections et respectivement sur au moins un demi-cycle d'onde, notamment au moins un cycle d'onde.

8. Pneumatique de véhicule avec une bande de roulement conçue de manière directionnelle avec des blocs de profil ou des nervures de profil avec des éléments de profil (1a, 1b) adjacents à l'entaille/aux entailles (2), selon l'une quelconque des revendications 1 à 4, **caractérisé en ce que en ce que** l'élément de profil (1a) qui entre le premier dans le sol lors du roulement du pneu en marche avant est délimité à l'arrière - à la suite du bord sortant - principalement ou complètement par la paroi d'entaille (3b) qui s'étend selon l'angle aigu (α) par rapport à la direction radiale.

9. Pneumatique de véhicule selon les revendications 4 et 8, **caractérisé en ce que**, dans les sections d'entaille (2a, 2b) s'étendant en forme d'escalier en vue de dessus, au moins dans les sections d'entaille les plus longues (2a), la paroi d'entaille (3b) se raccordant au bord sortant de l'élément de profil respectif (1a) s'étend selon l'angle aigu (α) par rapport à la direction radiale.

10. Pneumatique de véhicule selon l'une quelconque des revendications 1 à 3, **caractérisé en ce que** les sections d'entaille (2"'a, 2‴b) s'étendent parallèlement entre elles et sont respectivement décalées l'une par rapport à l'autre transversalement à la direction d'extension de l'entaille (2"'), de telle sorte que le fond d'entaille (3‴c) s'étend sous forme rectiligne à profondeur constante et de manière continue.

11. Pneumatique de véhicule selon l'une quelconque des revendications 1 à 3, **caractérisé en ce que** l'entaille (2"") présente, sur la surface extérieure du bloc de profil (1) ou de la nervure de profil, des bords d'entaille s'étendant sous forme rectiligne en vue de dessus, d'où partent les parois d'entaille (3""a, 3""b), et une largeur constante (b₁), les sections d'entaille (2""a, 2""b) étant décalées l'une par rapport à l'autre transversalement à la direction d'extension.

12. Pneumatique de véhicule selon une ou plusieurs des revendications 1 à 11, **caractérisé en ce qu'**il est prévu des blocs de profil ou au moins une nervure de profil, qui sont pourvus d'une pluralité d'entailles s'étendant parallèlement les unes aux autres.
